# FASCICULE DE BREVET EUROPEEN

(11) **EP 2 595 796 B1**
(45) Date de publication et mention de la délivrance du brevet: **06.03.2019**
(21) Numéro de dépôt: 11726879.7
(22) Date de dépôt: 18.05.2011
(51) Int. Cl.: B29C 70/14, B29C 45/00, B29C 43/00, B29L 23/00, B29C 45/73, B29K 101/10

(54) **PROCÉDÉ DE FABRICATION D'UNE PIÈCE EN MATÉRIAU COMPOSITE RÉSISTANT À L'EFFORT**
VERFAHREN ZUR HERSTELLUNG EINES TEILS AUS EINEM BELASTUNGSBESTÄNDIGEN VERBUNDSTOFF
METHOD FOR MANUFACTURING A PART MADE OF STRESS-RESISTANT COMPOSITE MATERIAL

(30) Priorité: 20.07.2010 FR 1055915
(43) Date de publication de la demande: 29.05.2013
(73) Titulaire: Coparl, 80250 Ailly-sur-Noye (FR)
(72) Inventeur: PILASTRE, Guillaume, F-80000 Amiens (FR)
(74) Mandataire: Novagraaf Technologies
(86) Numéro de dépôt international: PCT/FR2011/051113
(87) Numéro de publication internationale: WO 2012/010758

(56) Documents cités:
- GB-A- 1 220 267
- US-A- 5 273 819
- US-A1- 2002 175 487
- CORSCADDEN S P ET AL: "POLYESTER MOULDING COMPOUNDS WITH NOVEL INITIAL FIBRE ORIENTATION FOR USE IN INJECTION MOULDING", COMPOSITES MANUFACTURING, BUTTERWORTH SCIENTIFIC, GUILDFORD, SURREY, GB, vol. 1, no. 3, 1 septembre 1990 (1990-09-01), pages 173-182, XP000291966, ISSN: 0956-7143

## Description

L'invention concerne, de façon générale, les techniques de moulage.

Plus précisément, l'invention concerne, selon un premier aspect, un procédé selon la revendication 1 de fabrication d'une pièce résistant à l'effort, réalisée dans un matériau composite comprenant au moins une résine et des fibres de renfort noyées dans la résine, ce procédé comprenant une opération de moulage par compression, dans laquelle le matériau composite est contraint à fluer dans un canal appartenant à un moule et délimité par une paroi susceptible d'être chauffée, et dans laquelle les fibres adoptent une orientation au moins statistiquement préférentielle par fluage du matériau composite.

Un procédé de ce type est par exemple décrit dans le brevet GB 2 015 414.

Cependant, ce procédé connu ne permet de fabriquer que des pièces en matériau composite utilisant une résine thermoplastique et dans lesquelles l'orientation préférentielle des fibres résulte seulement d'une orientation préalable des fibres lors de l'introduction du matériau composite dans le moule.

Le document "Polyester moulding compounds with novel initial fibre orientation for use in injection moulding" (S.P. Corscadden et al., 1990) décrit l'effet de l'orientation initiale des fibres sur la résistance à l'effort des pièces moulées par injection d'un matériau composite comprenant une résine thermodurcissable.

Dans ce contexte, la présente invention a pour but de réaliser des pièces de plus haute résistance, et notamment des pièces soumises à des contraintes mécaniques telles qu'elles n'étaient jusqu'à présent réalisées qu'en métal.

A cette fin, le procédé de l'invention, par ailleurs conforme à la définition générique qu'en donne le préambule ci-dessus, comprend en outre: que la résine est une résine thermodurcissable, que le fluage du matériau composite dans le canal et le chauffage de la paroi de ce canal sont au moins partiellement concomitants, et que la température du canal et la vitesse de fluage du matériau composite dans le canal sont déterminées l'une par rapport à l'autre pour que le matériau composite fluant dans ce canal forme une veine fluide présentant une section moyenne qui décroît au cours du fluage de ce matériau dans ce canal en raison de la polymérisation de la résine.

Une pièce réalisée par le procédé conforme à l'invention, qui est réalisée en un matériau composite incluant au moins une résine et des fibres de renfort noyées dans la résine, et qui comprend au moins une zone résistant à l'effort délimitée par une surface externe et présentant une forme allongée suivant une première direction, est ainsi caractérisée en ce que la résine est thermodurcissable et en ce que les fibres de renfort, dans ladite zone résistant à l'effort, sont majoritairement orientées suivant une même direction commune.

De préférence, ladite direction commune des fibres est, au moins sur la plus grande partie de la longueur de ces fibres, intermédiaire entre ladite première direction et une direction perpendiculaire à la surface externe et, plus avantageusement encore, plus proche de la première direction que de la direction perpendiculaire à la surface externe.

Dans un mode de réalisation d'une telle pièce, ladite zone résistant à l'effort peut être au moins partiellement tubulaire.

Le procédé de l'invention peut notamment être appliqué à la réalisation d'une jambe de suspension pour un véhicule automobile.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique d'un moule utilisable pour mettre en oeuvre le procédé de l'invention et représenté en configuration ouverte;
- la figure 2 est une vue schématique d'un moule utilisable pour mettre en oeuvre le procédé de l'invention et représenté en début de fermeture;
- la figure 3 est une vue schématique d'un moule utilisable pour mettre en oeuvre le procédé de l'invention et représenté en configuration active de moulage;
- la figure 4 est une vue schématique d'un moule utilisable pour mettre en oeuvre le procédé de l'invention et représenté en fin de moulage;
- la figure 5 est une vue schématique d'une première variante du moule tel qu'illustré à la figure 3, le moule selon cette variante étant également représenté en configuration active de moulage;
- la figure 6 est une vue schématique de la première variante du moule tel qu'illustré à la figure 4, le moule selon cette variante étant également représenté en fin de moulage;
- la figure 7 est une vue schématique d'une deuxième variante du moule tel qu'illustré à la figure 3, le moule selon cette deuxième variante étant également représenté en configuration active de moulage; et
- la figure 8 est une vue schématique de la première variante du moule tel qu'illustré à la figure 4, le moule selon cette deuxième variante étant également représenté en fin de moulage.

Comme indiqué précédemment, l'invention concerne un procédé permettant de réaliser, par un procédé de moulage par compression, les figures illustrant un procédé de moulage par compression.

Les matériaux composites, qui peuvent se présenter sous forme de feuilles, d'empilements de feuilles, ou de pâte, comprennent au moins deux composants, à savoir une matrice 4 incluant au moins une résine, et un renfort composé de fibres 10, c'est-à-dire d'éléments dont une dimension est beaucoup plus grande que les autres.

Le renfort 10 joue le rôle d'un squelette supportant les efforts mécaniques, la matrice 4 ayant quant à elle pour fonction de transmettre les efforts mécaniques au renfort 10 et d'assurer la cohésion du matériau.

La matrice 4 peut, comme c'est le cas dans l'invention, comprendre une résine thermodurcissable (polyester, vinylester, epoxy ou autres) qui durcit par polymérisation sous l'effet d'une montée en température, et éventuellement des charges qui permettent de diminuer les coûts et de modifier les caractéristiques physiques du matériau.

Le renfort 10 peut être constitué de fibres (de verre, de carbone, de "Kevlar", d'aramide ou autres) dont la longueur est avantageusement supérieure ou égale à l'épaisseur de la paroi constituant la zone résistant à l'effort de la pièce à réaliser, et être présent dans une proportion comprise entre 10 et 60% de la masse du matériau constitutif de cette pièce.

Les procédés connus de moulage par compression actuels opèrent en deux phases distinctes dont la première consiste à remplir et fermer le moule, et dont la seconde consiste à provoquer la polymérisation de la résine, donc la solidification de la matrice, et à ouvrir le moule.

Dans les pièces connues ainsi réalisées, les fibres de renfort présentent une orientation aléatoire, de sorte que ces pièces offrent une résistance mécanique à la fois relativement isotrope et relativement faible.

L'invention propose de rendre au moins partiellement concomitantes les deux phases traditionnelles de moulage et notamment de commencer la polymérisation de la résine thermodurcissable 4 avant la fin de la fermeture du moule, de manière à obtenir une orientation privilégiée des fibres 10 au moins dans une zone déterminée de la pièce, et à renforcer ainsi la résistance de cette pièce dans cette zone.

Pour ce faire, l'invention propose de régler l'une par rapport à l'autre la température du moule au moins dans le canal du moule 1 qui doit former la zone résistante de la pièce, et la vitesse de fluage du matériau composite dans ce canal, de manière à obtenir une polymérisation de la résine présente dans la matrice 4 à proximité des parois 2 et 3 du canal, alors que le matériau composite continue de fluer au coeur de la veine fluide qu'il forme dans le canal.

Les parties des fibres 10 qui sont incluses dans les zones déjà polymérisées sont ainsi bloquées, alors que les parties des fibres 10 qui sont incluses dans les zones non encore polymérisées se déplacent dans le sens du flux du matériau composite.

Il en résulte que ces fibres 10 s'orientent majoritairement, et même pratiquement sans exception, suivant une même direction commune.

La direction commune privilégiée des fibres 10 est, au moins sur la plus grande partie de la longueur de ces fibres, la plus proche possible de la direction que prend le flux du matériau composite lors de la fermeture du moule 1, cette orientation privilégiée des fibres 10 permettant d'accroître la résistance mécanique de la pièce réalisée vis-à-vis des sollicitations mécaniques auxquelles cette pièce pourra être soumise et qui se traduiront par une sollicitation des fibres suivant leur orientation préférentielle.

Bien que la vitesse de fluage du matériau composite dans le canal ou chaque canal d'un moule dépende de plusieurs facteurs tels que la forme, la longueur et l'épaisseur du canal, la viscosité du matériau, la vitesse de fermeture du moule et la pression de moulage, l'homme du métier sait évaluer cette vitesse.

Comme en outre il connaît la loi liant la vitesse de polymérisation du matériau composite qu'il utilise à la température de ce matériau, il lui suffit de régler l'une par rapport à l'autre la vitesse de fluage du matériau dans le canal et la température dans ce canal de manière, d'une part, que la polymérisation commence avant la fin du fluage du matériau composite dans le moule et de manière, d'autre part, que le matériau composite puisse fluer pour remplir tout le moule avant la fin de la polymérisation.

De façon connue en soi, les parois telles que 2 et 3 de chaque canal sont chauffées au moyen d'éléments chauffants tels que 6, 7, 8, ou 9.

Dans le procédé de l'invention le matériau composite, qui comprend au moins des fibres 10 et une matrice 4 incluant une résine thermodurcissable, est inséré dans un moule 1 dont au moins un canal est délimité par une ou plusieurs parois 2 et 3 chauffées par des éléments chauffants 6 à 9.

Le matériau composite est ensuite comprimé mécaniquement au moyen d'un élément 5 de fermeture du moule.

Cette compression produit le fluage du matériau composite, qui forme une veine fluide permettant, à la fin du moulage, un remplissage complet du moule en matériau composite.

L'invention est particulièrement applicable à la réalisation de pièces présentant, dans leur zone de résistance, une épaisseur comprise entre 3 mm et 30 mm.

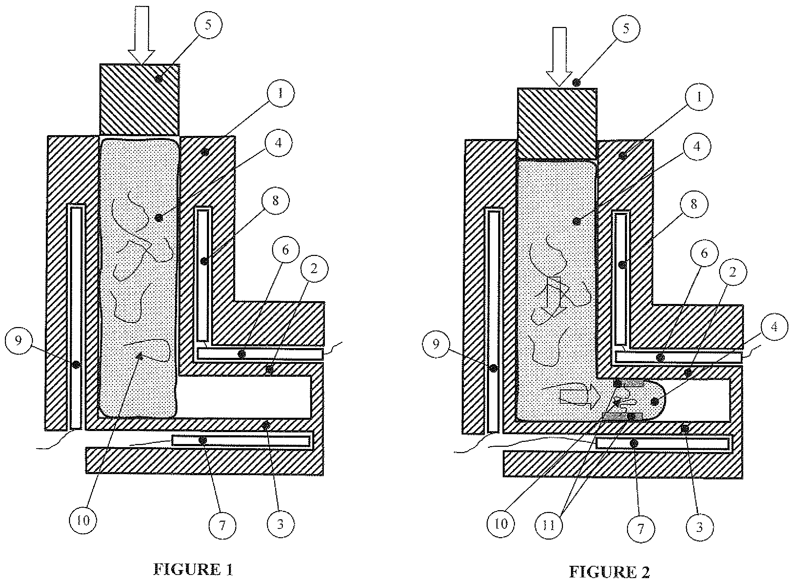

Comme le montre notamment la figure 2, le fluage du matériau composite dans le canal et la polymérisation de la résine contenue dans ce matériau constituent deux phénomènes qui, dans l'invention, sont mis en concurrence l'un avec l'autre, de sorte que la veine fluide que forme le matériau composite progressant dans le canal du moule présente une section transversale qui se réduit en raison de la polymérisation de la résine 4 sur la ou les parois 2 et 3 du canal.

Bien que l'homme du métier soit en mesure de mettre en oeuvre l'invention directement à partir des indications ci-dessus et de ses connaissances générales, une mise en oeuvre optimale de l'invention peut être obtenue à partir d'un nombre d'essais très restreint et des indications supplémentaires ci-après.

Les paramètres d'influence du procédé sont constitués par le temps Tf de fermeture du moule 1, la température Tp de la ou des parois 2 et 3 du canal dans lequel est moulé la zone de résistance de la pièce, la pression P de moulage, le temps Td de début de polymérisation de la résine thermodurcissable, encore appelé temps de début d'exothermie, et la viscosité N du matériau composite.

Le temps Td de début de polymérisation représente la durée minimale pendant laquelle le matériau doit être en contact avec la paroi chauffée du moule pour amorcer le processus de polymérisation. Ce temps Td est propre à chaque matériau et varie en fonction de la température Tp des parois : plus la température Tp est élevée et plus le temps Td est court et, inversement, plus la température Tp est basse et plus le temps Td est long.

Il convient par conséquent d'adapter le temps Tf de fermeture du moule de telle sorte qu'il soit supérieur au temps Td de début de polymérisation pour permettre l'orientation des fibres dans le sens du flux.

Plus la différence entre les temps Tf et Td sera grande, plus la quantité de fibres dirigées dans le sens du flux sera importante, et plus la résistance mécanique de la pièce réalisée sera élevée pour des efforts dont les contraintes mécaniques résultantes sollicitent le matériau composite dans le sens de l'orientation préférentielle des fibres.

Cependant, comme il convient aussi d'assurer un remplissage complet du moule 1, la pression de moulage P doit être ajustée en fonction de la viscosité N du matériau composite pour atteindre ce résultat, la pression de moulage P devant être d'autant plus importante que la viscosité N est élevée.

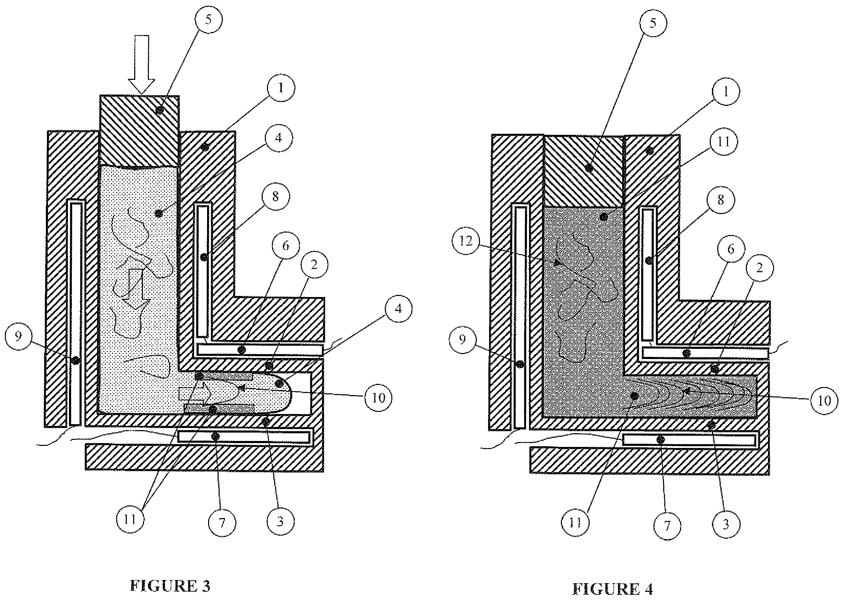

La figure 3 illustre l'entraînement, par la veine fluide du matériau composite non encore solidifié, et dans la direction de fluage de cette veine fluide, de la partie des fibres 10 non encore bloquées par la résine 11 déjà polymérisée. Ce phénomène, qui permet la mise en tension des fibres 10 et leur orientation dans le sens d'écoulement de la veine fluide, confère à la pièce moulée une résistance optimale dans cette zone.

Ce procédé d'orientation de fibres peut être appliqué à l'ensemble de la pièce moulée, ou appliqué seulement à une ou plusieurs zones particulières de cette pièce. Cette différentiation s'obtient par application d'une température plus faible dans les zones dans lesquelles l'orientation préférentielle des fibres n'est pas recherchée. La différence de température entre les zones du moule où une orientation privilégiée des fibres est recherchée et les zones où une telle orientation n'est pas recherchée s'obtient par des réglages différents des éléments chauffants de chaque zone, la température des éléments chauffants 8 et 9 étant par exemple inférieure à celle des éléments chauffants 6 et 7.

La figure 4 illustre l'état dans lequel le moule est complètement fermé et dans lequel la solidification du matériau composite s'achève, permettant ainsi de figer définitivement l'orientation des fibres 10.

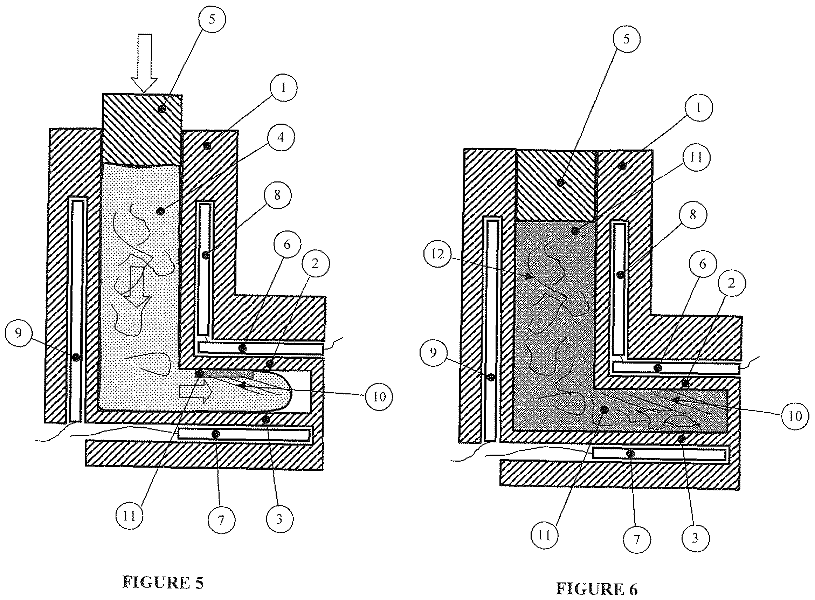

Les figures 5 et 6 illustrent un mode d'orientation des fibres 10 dans lequel les éléments chauffants d'un canal sont portés à des températures différentes.

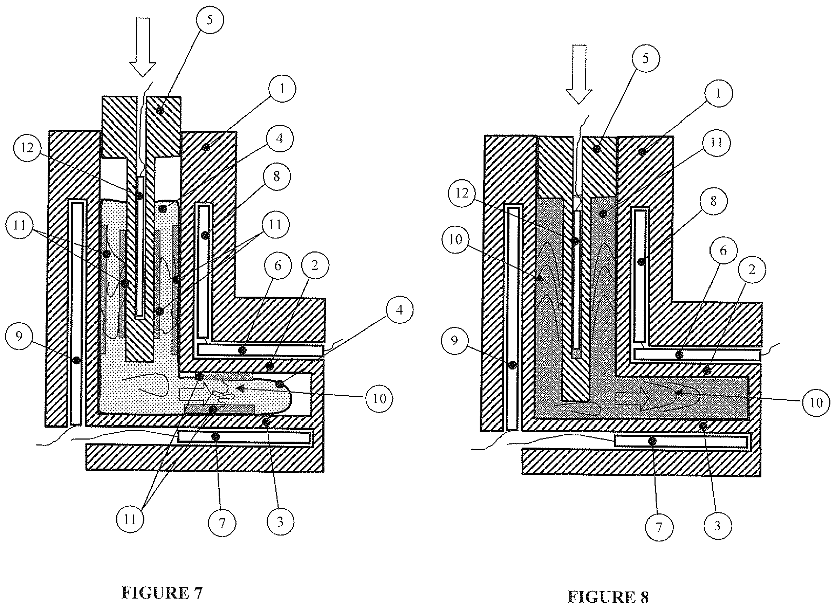

Les figures 7 et 8 illustrent une application du procédé de l'invention à la réalisation d'une pièce creuse.

Le procédé de l'invention permet de réaliser des pièces en matériau composite présentant une résistance mécanique notablement plus élevée, par exemple deux fois plus élevée, que celle des pièces réalisées, à partir du même matériau composite, en utilisant les procédés conventionnels de moulage par compression.

## Revendications

1. Procédé de fabrication d'une pièce résistant à l'effort, réalisée dans un matériau composite (4, 10) comprenant au moins une résine (4) et des fibres de renfort (10) noyées dans la résine (4),
ce procédé comprenant au moins une opération de moulage, dans laquelle le matériau composite est contraint à fluer dans un canal appartenant à un moule (1) et délimité par au moins une paroi (2), (3) susceptible d'être chauffée, et dans laquelle les fibres (10) adoptent une orientation préférentielle suivant une même direction commune par fluage du matériau composite,
la résine (4) étant une résine thermodurcissable,
le fluage du matériau composite dans le canal et le chauffage de la paroi (2), (3) du canal étant au moins partiellement concomitants,
la température du canal et la vitesse de fluage du matériau composite dans le canal étant déterminées l'une par rapport à l'autre pour que le matériau composite (4), (10) fluant dans ce canal (2), (3) forme une veine fluide,
**caractérisé en ce que** l'opération de moulage s'opère par compression,
**en ce que** la veine fluide présente une section moyenne qui décroît au cours du fluage de ce matériau composite (4), (10) dans ce canal en raison de la polymérisation de la résine,
**en ce que** ce procédé comprend :
• une étape de fermeture du moule (1) durant un temps T_{f} de fermeture du moule (1), et
• une étape de début de polymérisation durant un temps T_{d} de début de polymérisation, et **en ce que** le temps T_{f} de fermeture du moule (1) est supérieur au temps T_{d} de début de polymérisation.

2. Procédé de fabrication selon la revendication 1, **caractérisé en ce que** le moule (1) comporte des éléments chauffants (6), (7), (8), (9) adaptés à chauffer la paroi (2), (3), et
**en ce que** ces éléments chauffants (6), (7), (8), (9) sont portés à des températures différentes.

3. Procédé de fabrication selon la revendication 2, **caractérisé en ce que** la pièce résistant à l'effort est tubulaire.

## Patentansprüche

1. Verfahren zum Herstellen eines widerstandsfähigen Werkstücks, das aus einem Verbundwerkstoff (4, 10) gefertigt ist, der mindestens ein Harz (4) und Verstärkungsfasern (10) umfasst, die in das Harz (4) eingebettet sind,
wobei dieses Verfahren mindestens einen Formvorgang umfasst, bei dem der Verbundwerkstoff gezwungen wird, in einen Kanal zu fließen, der zu einer Form (1) gehört und durch mindestens eine Wand (2), (3) eingegrenzt wird, die beheizt werden könnte, und bei dem die Fasern (10) eine bevorzugte Orientierung entlang einer selben, durch Fließen des Verbundwerkstoffes gemeinsamen Richtung einnehmen,
wobei das Harz (4) ein wärmehärtbares Harz ist,
wobei das Fließen des Verbundwerkstoffes in dem Kanal und das Beheizen der Wand (2), (3) des Kanals mindestens teilweise gleichzeitig erfolgen,
wobei die Temperatur des Kanals und die Fließgeschwindigkeit des Verbundwerkstoffes in dem Kanal zueinander bestimmt werden, damit der Verbundwerkstoff (4), (10), der in diesem Kanal (2), (3) fließt, einen Fluidstrahl bildet,
**dadurch gekennzeichnet, dass** der Formvorgang durch Kompression vorgenommen wird,
dadurch, dass der Fluidstrahl einen mittleren Querschnitt aufweist, der im Laufe des Fließens dieses Verbundwerkstoffes (4), (10) in diesem Kanal aufgrund der Polymerisation des Harzes abnimmt,
dadurch, dass dieses Verfahren umfasst:
• einen Schritt zum Schließen der Form (1) während einer Zeit T_{f} zum Schließen der Form (1), und
• einen Schritt zum Beginnen der Polymerisation während einer Zeit T_{d} zum Beginnen der Polymerisation, und
dadurch, dass die Zeit T_{f} zum Schließen der Form (1) länger ist, als die Zeit T_{d} zum Beginnen der Polymerisation.

2. Verfahren zum Herstellen nach Anspruch 1, **dadurch gekennzeichnet, dass** die Form (1) Heizelemente (6), (7), (8), (9) beinhaltet, die angepasst sind, um die Wand (2), (3) zu beheizen, und
dadurch, dass diese Heizelemente (6), (7), (8), (9) auf unterschiedliche Temperaturen gebracht werden.

3. Verfahren zum Herstellen nach Anspruch 2, **dadurch gekennzeichnet, dass** das widerstandsfähige Werkstück rohrförmig ist.

## Claims

1. A method for manufacturing a stress-resistant part made of a composite material (4,10) comprising at least a resin (4) and reinforcing fibers (10) laid in resin (4), the method comprising at least a molding operation,
wherein the composite material is forced to flow in a direction along a channel belonging to a mold (1) and delimited by at least one wall (2), (3) adapted to be heated, and
wherein the fibers (10) assume a common preferred orientation by means of the flow of the composite material,
- the resin (4) being a thermosetting resin,
- the flow of the composite material in the channel and the heating of the wall (2), (3) of the channel being at least partially concomitant,
- the temperature of the channel and the flow velocity of the composite material in the channel are determined with respect to each other so that the composite material (4), (10) flowing in the channel (2), (3) forming a fluid line, and
**characterized in that** the molding operation is realized by compression, and
**in that** the fluid line presents a mean cross-section that decreases during the flow of the composite material (4)(10) in said channel, due to the polymerization of the resin, and
**in that** said method further comprises :
a step of closing of the mold (1) during a closing time T_{f} of the mold (1), and
a step of starting of the polymerization during a start time T_{d} of the starting of the polymerization, and
**in that** the closing time T_{f} of the mold (1) is higher than the start time T_{d} of the starting of the polymerization.

2. The method for manufacturing according to claim 1, wherein the mold (1) comprises heating members (6), (7), (8), (9) adapted to heat the wall of the channel (2), (3), and wherein the heating members (6), (7), (8), (9) are put at different temperatures.

3. The method for manufacturing according to claim 2, wherein the manufactured stress-resistant part made of the composite material is tubular.
